# EUROPÄISCHE PATENTANMELDUNG

(11) **EP 4 218 422 A1**
(43) Veröffentlichungstag der Anmeldung: **02.08.2023**
(21) Anmeldenummer: 23151974.5
(22) Anmeldetag: 17.01.2023
(51) Int. Cl.: A23L 2/70, C12H 1/056, C12H 1/065

(54) **VERFAHREN UND GETRÄNKEBEHANDLUNGSANLAGE ZUR STABILISIERUNG VON GETRÄNKEN**

(30) Priorität: 01.02.2022 DE 102022102235
(71) Anmelder: KHS GmbH, 44143 Dortmund (DE)
(72) Erfinder: Aps, Jakob, 55595 Mandel (DE); Zeller, Andreas, 55545 Bad Kreuznach (DE)

(57) **Zusammenfassung**

Die Erfindung betrifft ein Verfahren zur Stabilisierung von Getränken, insbesondere von Bier, bei dem eine zu stabilisierende Flüssigkeit zugeführt und mit einem Stabilisierungsmittel versetzt wird und wobei Bestandteile der Flüssigkeit von dem Stabilisierungsmittel gebunden und nachfolgend mit dem Stabilisierungsmittel aus der Flüssigkeit entfernt werden. Erfindungsgemäß ist vorgesehen, dass das mit den gebundenen Bestandteilen beladene Stabilisierungsmittel durch Zentrifugalseparation von der Flüssigkeit abgetrennt wird.

## Beschreibung

Die Erfindung bezieht sich auf ein Verfahren zur Stabilisierung von Getränken, insbesondere von Bier, bei dem eine zu stabilisierende Flüssigkeit zugeführt und mit einem Stabilisierungsmittel versetzt wird und wobei Bestandteile der Flüssigkeit von dem Stabilisierungsmittel gebunden und nachfolgend mit dem Stabilisierungsmittel aus der Flüssigkeit entfernt werden.

Die Erfindung betrifft des Weiteren eine Getränkebehandlungsanlage zur Stabilisierung von Getränken und insbesondere zur Durchführung des zuvor beschriebenen Verfahrens mit einer Getränkezuführung, einer Stabilisierungsmittelzuführung für die Zuführung eines Stabilisierungsmittels, einem in einer Fließrichtung an die Getränkezuführung und an die Stabilisierungsmittelzuführung anschließenden Kontakt- und Reaktionsbereich und mit einer entlang der Fließrichtung an den Kontakt- und Reaktionsbereich anschließenden Trenneinrichtung, welche dazu ausgebildet ist, das Stabilisierungsmittel mit daran gebundenen Bestandteilen aus der Flüssigkeit zu entfernen.

Bei der zu stabilisierenden Flüssigkeit handelt es sich um das Getränk oder eine Getränkekomponente. Es ist bekannt, dass Getränke, wie beispielsweise Bier, nach ihrer Produktion Bestandteile aufweisen, welche aus physiologischer, hygienischer, geschmacklicher und/oder ästhetischer Sicht unerwünscht sind.

Beispielsweise bevorzugen Verbraucher häufig klare Biere, welche dann als besonders hochwertig und rein wahrgenommen werden.

Bereits unmittelbar nach der Herstellung vorliegende Schwebstoffe und andere eine Trübung hervorrufende Bestandteile können durch eine bekannte und übliche Bierfiltration entfernt werden. Des Weiteren ist jedoch zu berücksichtigen, dass auch weitere Bestandteile während der anschließenden Lagerung der Getränke zu einer unerwünschten Veränderung und insbesondere einer Trübung führen können.

Bei Bier ist eine Trübung während der Lagerung beispielsweise auf eine chemische Reaktion der enthaltenen Bestandteile zurückzuführen, wobei die Trübung insbesondere auf polyphenolische Verbindungen und/oder bestimmte Proteinfraktionen zurückgeführt werden kann.

Zur Entfernung derartiger polyphenolischer Verbindungen und Proteinfraktionen aus Bier sind aus dem Stand der Technik verschiedene Ansätze bekannt. Nach der Entfernung von Hefen und Trübstoffen mittels Filtration erfolgt eine sogenannte Stabilisierung. Dabei wird ein Stabilisierungsmittel in definierter Menge zugegeben, welches unerwünschte Bestandteile wie die zuvor genannten polyphenolischen Verbindungen und/oder bestimmte Proteinfraktionen binden kann, wobei dann diese an das Stabilisierungsmittel gebundenen Bestandteile zusammen mit dem Stabilisierungsmittel aus der Flüssigkeit entfernt werden. Die so gereinigte Flüssigkeit wird dann als stabilisiert bezeichnet.

Dabei ist zu beachten, dass die genannten Bestandteile nicht vollständig und somit nur zu einem gewissen Grad entfernt werden müssen, um auch langfristig eine Trübung zu vermeiden und insgesamt eine gute Lagerfähigkeit zu erreichen. Auch wenn eine übliche Stabilisierung nur einen geringen Einfluss auf den Geschmack des Getränkes hat, kann ein wechselnder Grad der Stabilisierung zu gewissen geschmacklichen Schwankungen führen. Bei einer zu starken Stabilisierung ergibt sich auch ein erhöhter Verfahrensaufwand, insbesondere für die Bereitstellung des Stabilisierungsmittels.

Grundsätzlich besteht also das Bedürfnis, die Stabilisierung von Getränken möglichst gleichmäßig und effizient durchzuführen.

Im Rahmen der Stabilisierung wird das Getränk, also beispielsweise Bier, mit dem Stabilisierungsmittel in Kontakt gebracht, welches einen bevorzugten Reaktionspartner für die polyphenolischen Verbindungen und/oder bestimmte Proteinfraktionen darstellt und diese Bestandteile somit binden kann. Dabei ist es möglich, frisch zugeführtes Stabilisierungsmittel nur einmal einzusetzen oder auch ein Stabilisierungsmittel einzusetzen, welches regeneriert und einem Kreislauf geführt wird. Die vorliegende Erfindung bezieht sich grundsätzlich auf beide Ansätze, wobei jedoch eine Regeneration des Stabilisierungsmittels aus ökonomischen und ökologischen Gründen bevorzugt ist.

Der Grad der Entfernung der Polyphenole aus dem Bier ist von einer Vielzahl von Faktoren abhängig. Von besonderer Bedeutung sind insbesondere die Menge des zugesetzten Stabilisierungsmittels, die Anzahl der freien Adsorptionsstellen des Stabilisierungsmittels und die Länge der Kontaktzeit des Bieres mit dem Stabilisierungsmittel.

Zur Entfernung des beladenen Stabilisierungsmittels aus der Flüssigkeit werden in der Praxis Filtereinheiten, insbesondere sogenannte Anschwemmfilter, verwendet. Anschwemmfilter weisen dabei ein angeschwemmtes Filtersubstrat und/oder einen durch bereits herausgeführtes Stabilisierungsmittel aufgebauten Filterkuchen auf, der dann weiter anwachsen kann. Der Filterkuchen kann solange anwachsen, bis ein vorgesehener Freiraum ausgefüllt ist und/oder bis ein zu großer Strömungswiderstand eintritt. Die Filtereinheit wird dann in einem separaten Betriebsmodus regeneriert.

Die Filtereinheit kann beispielsweise einen Filterkessel mit zumindest einer sogenannten Filterkerze aufweisen, wobei eine Trennwand den Filterkessel in einen Unfiltrat- und einen Filtratraum trennt. Der Aufbau und die Funktionsweise derartiger Anschwemmfiltereinheiten ist beispielsweise in der EP 1 380 332 A1 beschrieben. Nachteilig gestaltet sich jedoch die Reinigung derartiger Filterkerzen. Für die Reinigung ist der Betrieb der Filtereinheit zu unterbrechen.

Vor diesem Hintergrund ist es aus der Praxis auch bekannt, mehrere Filtereinheiten parallel zu betreiben, wozu auch auf die EP 1 949 948 A1 verwiesen wird.

Aus der EP 2 686 413 B2 ist ein Verfahren zur Stabilisierung einer Flüssigkeit, insbesondere Bier, bekannt, bei dem zumindest zwei Filtereinheiten eingesetzt werden. Die Filtereinheiten können untereinander wechselweise in Reihe geschaltet werden, um während des üblichen Betriebs einer Filtereinheit bei der anderen Filtereinheit ein Anschwemmen zum Aufbau des gewünschten Filterkuchens zu erreichen. Auch wenn damit ein kontinuierlicher und vergleichsweise effizienter Betrieb möglich ist, ergibt sich noch ein erheblicher apparativer und verfahrenstechnischer Aufwand.

Der vorliegenden Erfindung liegt die Aufgabe zugrunde, ein Verfahren und eine Getränkebehandlungsanlage zur Stabilisierung von Getränken anzugeben, welche besonders einfach und effizient sind.

Gegenstand der Erfindung und Lösung der Aufgabe sind ein Verfahren zur Stabilisierung von Getränken gemäß Patentanspruch 1 sowie eine Getränkebehandlungsanlage zur Stabilisierung von Getränken gemäß Patentanspruch 11.

Ausgehend von einem gattungsgemäßen Verfahren ist somit erfindungsgemäß vorgesehen, dass das mit den gebundenen Bestandteilen beladene Stabilisierungsmittel durch Zentrifugalseparation von der Flüssigkeit getrennt wird.

Die Zentrifugalseparation kann mit vergleichsweise einfachen Mitteln kontinuierlich durchgeführt werden. Insbesondere ergeben sich im Vergleich zu einer Filtereinheit mit einem über die Zeit anwachsenden Filterkuchen auch sehr gleichmäßige, gleichbleibende Bedingungen, sodass der Grad der Stabilisierung besser eingestellt und beibehalten werden kann.

Neben einem kontinuierlichen Betrieb ist die Zentrifugalseparation auch besonders robust und sicher gegen eine Fehlfunktion. Bei aus dem Stand der Technik bekannten Filtereinheiten besteht dagegen stets die Gefahr eines Verschleißes und/oder einer Beschädigung in den unterschiedlichen, aufeinanderfolgenden Betriebszuständen.

Das Stabilisierungsmittel kann grundsätzlich für eine einmalige Benutzung zunächst frisch zugegeben und dann nach der Abscheidung durch die Zentrifugalseparation entsorgt werden. Bevorzugt ist jedoch eine Ausgestaltung, bei der das durch die Zentrifugalseparation abgetrennte Stabilisierungsmittel zunächst zumindest teilweise regeneriert wird, wobei dann zumindest ein Teil der gebundenen Bestandteile bei der Regeneration entfernt wird und das Stabilisierungsmittel dann mit freien Absorptionsstellen der zu stabilisierenden Flüssigkeit zugegeben wird. Vor diesem Hintergrund versteht sich, dass das zuvor allgemein beschriebene Verfahren sich sowohl auf regeneriertes als auch vollständig frisches Stabilisierungsmittel beziehen kann.

Im Unterschied zu bekannten Ausführungen aus dem Stand der Technik kann das Verfahren vollständig oder weitestgehend kontinuierlich erfolgen. Insbesondere ist ein Umschalten zwischen verschiedenen Filtereinheiten für die Abscheidung des beladenen Stabilisierungsmittels während der Verfahrensführung nicht notwendig. Bei einem gleichmäßigen Zufluss der zu stabilisierenden Flüssigkeit kann die dann nachfolgend stabilisierte Flüssigkeit sowie das mit den gebundenen Bestandteilen beladene Stabilisierungsmittel kontinuierlich von der Zentrifugalseparation abgezogen werden, was zu einer weiteren Vereinheitlichung des Verfahrens führt.

Wenn dann im Rahmen der Erfindung das Stabilisierungsmittel für die Nutzung in einem Kreislauf der Regeneration unterzogen wird, kann das beladene Stabilisierungsmittel zunächst gesammelt und dann schrittweise in einem diskontinuierlichen Prozess aufbereitet werden.

Im Rahmen der Erfindung ist jedoch bevorzugt eine kontinuierliche Regeneration möglich, wobei besonders bevorzugt ein mehrstufiger Regenerationsprozess vorgesehen ist. Die Regeneration des Stabilisierungsmittels kann dabei in an sich bekannter Weise durch die Behandlung mit einer Säure, einer Lauge und/oder Heißwasser erfolgen.

Da im Rahmen der Erfindung das beladene Stabilisierungsmittel nicht für eine gewisse Zeit in einem Filterkuchen gebunden wird, ergibt sich bei einem Prozess mit einer Regeneration des Stabilisierungsmittels eine deutliche Reduzierung des insgesamt in einem Kreislauf geführten Stabilisierungsmittels. Dies gilt im besonderen Maße, wenn auch der Regenerationsprozess kontinuierlich erfolgt. Folglich müssen keine großen Mengen an Stabilisierungsmittel vor oder nach der Regeneration gespeichert werden.

Bei einer aus dem Stand der Technik bekannten Abtrennung des beladenen Stabilisierungsmittels mittels Filtration muss das Stabilisierungsmittel in einer geeigneten Partikelgrößenverteilung vorliegen. Zusätzlich ist das Stabilisierungsmittel bei seiner Rückgewinnung in einem Filterprozess mechanischen Belastungen ausgesetzt, so dass beispielsweise bei einer unerwünschten Zerkleinerung des Stabilisierungsmittels eine Erneuerung des Stabilisierungsmittels notwendig sein kann.

Durch die erfindungsgemäße Zentrifugalseparation werden mechanische Belastungen reduziert, wobei auch angenommen wird, dass aufgrund einer geringeren Sensitivität des Verfahrens hinsichtlich der Partikelgröße die Nutzungsdauer des Stabilisierungsmittels wesentlich erhöht werden kann.

In dem gesamten Kreislauf wird also nicht nur weniger Stabilisierungsmittel benötigt, dieses ist auch einem geringeren Verschleiß ausgesetzt und kann zusätzlich auch selbst bei einer gewissen Veränderung der Partikelgrößenverteilung länger genutzt werden.

Wie bereits zuvor erläutert, kann im Rahmen der Erfindung die zu stabilisierende Flüssigkeit kontinuierlich zugeführt und die stabilisierte Flüssigkeit von der Zentrifugalseparation kontinuierlich abgeführt werden. Entsprechend ist auch bevorzugt, dass das Stabilisierungsmittel insbesondere über eine Dosiervorrichtung der zu stabilisierenden Flüssigkeit kontinuierlich zugeführt wird. Das Reaktionsverhalten ist dabei nicht von einem anwachsenden Filterkuchen abhängig und somit besonders gut bestimmbar. Um eine gewünschte Kontaktdauer zu erreichen, können bis zur Zentrifugalseparation ausreichend lange Strömungswege und/oder auch eine Zwischenlagerung in einem Tank oder dergleichen vorgesehen sein.

In an sich bekannter Weise kann die zu stabilisierende Flüssigkeit aus einem Filtrationsprozess zugeführt werden, in welchem beispielsweise Hefe und andere Trübstoffe entfernt werden. Dabei ergibt sich dann auch der Vorteil, dass bei der Zentrifugalseparation im Wesentlichen nur das Stabilisierungsmittel mit den daran gebundenen Bestandteilen und nicht zusätzlich auch noch enthaltene Trüb- und Schwebstoffe abgeschieden werden.

Bevorzugt ist vorgesehen, dass durch die Zentrifugalseparation das zuvor zugegebene Stabilisierungsmittel vollständig oder nahezu vollständig aus der Flüssigkeit abgetrennt wird. So ist vorzugsweise vorgesehen, dass durch die Zentrifugalseparation zumindest 95 %, besonders bevorzugt zumindest 98 % des Stabilisierungsmittels aus der Flüssigkeit abgetrennt wird. Der angegebene Anteil bezieht sich dabei auf das Gewicht des insgesamt in der Flüssigkeit enthaltenen Stabilisierungsmittels bei dem Zulauf zu der Zentrifugalseparation.

Optional kann im Rahmen der Erfindung vorgesehen sein, dass die stabilisierte Flüssigkeit nach der Zentrifugalseparation durch einen Filter geleitet wird, um gegebenenfalls verbleibende Reste des beladenen Stabilisierungsmittels zu entfernen. Da - wie zuvor erläutert - das Stabilisierungsmittel üblicherweise zu einem sehr großen Anteil oder auch vollständig entfernt ist, weist ein solcher der Zentrifugalseparation nachgelagerter Filter üblicherweise eine sehr lange Standzeit auf.

Gegenstand der Erfindung ist auch eine Getränkebehandlungsanlage zur Stabilisierung von Getränken, insbesondere zur Stabilisierung von Bier. Die Getränkebehandlungsanlage ist insbesondere für die Durchführung des zuvor beschriebenen Verfahrens ausgebildet. Ausgehend von einer Getränkebehandlungsanlage gemäß dem Oberbegriff des Patentanspruchs 11 ist erfindungsgemäß vorgesehen, dass die Trenneinrichtung zumindest einen Zentrifugalseparator umfasst.

Bevorzugt ist vorgesehen, dass dem Zentrifugalseparator eine Rückführung für das Stabilisierungsmittel nachgelagert ist, wobei die Rückführung eine Regenerationseinrichtung für das Stabilisierungsmittel aufweist.

In seiner konkreten Ausgestaltung kann die Regenerationseinrichtung eine Transporteinrichtung für das Stabilisierungsmittel sowie Sprüh- und/oder Spüleinrichtungen zur Behandlung des Stabilisierungsmittels aufweisen. Bei der Transporteinrichtung kann es sich insbesondere um eine kontinuierliche Transporteinrichtung, beispielsweise ein Transportband, handeln.

Die Rückführung kann auch einen Puffertank für das Stabilisierungsmittel aufweisen. Ein solcher Puffertank kann beispielsweise der Regenerationseinrichtung nachgelagert sein.

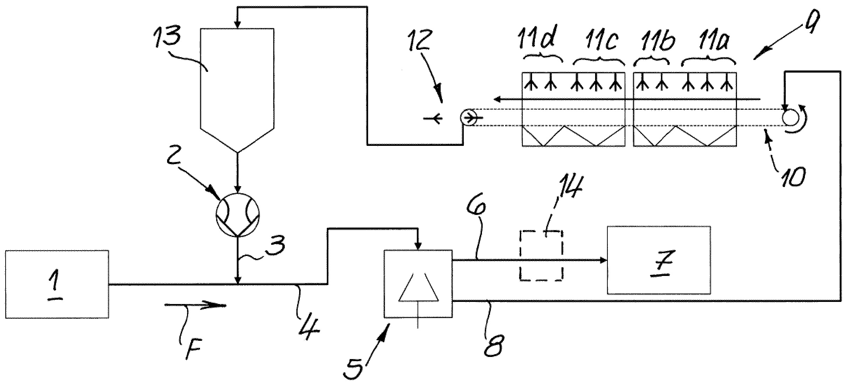

Die Erfindung wird nachfolgend anhand eines Ausführungsbeispiels erläutert. Die einzige Figur zeigt eine schematische Prozessskizze, mit der das erfindungsgemäße Verfahren sowie die erfindungsgemäße Getränkebehandlungsanlage erläutert werden.

Die einzige Figur zeigt eine Prozessskizze zur Stabilisierung von Getränken, insbesondere Bier. Eine zu stabilisierende Flüssigkeit, also insbesondere Bier, wird von einer Bierfiltration 1 entlang einer Fließrichtung F zugeführt. Die zu stabilisierende Flüssigkeit wird dann mit einem Stabilisierungsmittel versetzt, welches über eine steuerbare Pumpe 2 über eine Stabilisierungsmittelzuführung 3 zugegeben wird.

In einem in Fließrichtung F anschließenden Kontakt- und Reaktionsbereich 4 bindet das Stabilisierungsmittel Bestandteile der Flüssigkeit. In dem exemplarischen Ausführungsbeispiel ist Bier als Flüssigkeit vorgesehen, welches nach der Bierfiltration 1 unter anderem noch polyphenolische Verbindungen und verschiedene Proteinfraktionen enthält, die bei einer weiteren Lagerung des Biers zu einer unerwünschten Trübung führen können. Diese Bestandteile werden durch das Stabilisierungsmittel so weit entfernt, dass eine entsprechende Trübung vermieden oder zumindest deutlich verlangsamt ist. Die Fließgeschwindigkeiten, die Menge an Flüssigkeit und an Stabilisierungsmittel sowie die Verweildauer können in geeigneter Weise festgelegt werden. Gegebenenfalls kann für eine ausreichende Kontaktzeit in dem Kontakt- und Reaktionsbereich 4 auch eine nicht dargestellte Zwischenspeicherung vorgesehen sein.

An den Kontakt- und Reaktionsbereich 4 schließt entlang der Fließrichtung F ein Zentrifugalseparator 5 an, welche das Stabilisierungsmittel, vorzugsweise Polyvinylpolypyrrolidon (PVPP) von der Flüssigkeit trennt, die dann an einem ersten Ausgang 6 als stabilisierte Flüssigkeit, also in dem Ausführungsbeispiel als stabilisiertes Bier abgezogen wird. Von dem ersten Ausgang 6 wird das stabilisierte Bier dann einer Weiterverarbeitung 7 zugeführt und kann dazu zunächst in einen Lagerkeller oder direkt zu einer Abfüllung geleitet werden.

An einem zweiten Ausgang 8 wird das mit den gebundenen Bestandteilen beladene Stabilisierungsmittel abgeführt und zu einer Regenerationseinrichtung 9 geleitet. Das beladene Stabilisierungsmittel wird dann auf eine kontinuierliche, umlaufende Transporteinrichtung 10 der Regenerationseinrichtung 9 in Form eines Förderbandes aufgegeben und kontinuierlich an mehreren aufeinanderfolgenden Sprüh- und/oder Spüleinrichtungen 11a bis 11d vorbeigeführt.

Mit der ersten Sprüh- und/oder Spüleinrichtung 11a erfolgt im dargestellten Ausführungsbeispiel eine Behandlung mit Lauge, bevor mit der zweiten Sprüh- und/oder Spüleinrichtung 11b eine erste Heißwasserspülung erfolgt. Sodann erfolgt mit einer weiteren Sprüh- und/oder Spüleinrichtung 11c die Behandlung mit Säure, bevor mit der letzten Sprüh- und/oder Spüleinrichtung 11d eine zweite Heißwasserspülung erfolgt.

Schließlich ist mit einer nachgelagerten Abspüleinrichtung 12 noch ein abschließendes Abspülen des Stabilisierungsmittels mit entgastem Wasser vorgesehen, bevor das Stabilisierungsmittel in einen Puffertank 13 geleitet wird. Von dem Puffertank 13 kann das regenerierte Stabilisierungsmittel über die Pumpe 2 und über die Stabilisierungsmittelzuführung 3 erneut mit zu stabilisierender Flüssigkeit in Kontakt gebracht werden.

Da im Rahmen der Erfindung Ansammlungen des Stabilisierungsmittels beispielsweise in einem Filterkuchen vermieden werden, sind insgesamt vergleichsweise geringe Mengen an im Kreislauf geführtem Stabilisierungsmittel sowie auch ein vergleichsweise kleiner Puffertank 13 ohne weiteres ausreichend.

Optional kann die aus dem ersten Ausgang 6 abgeführte stabilisierte Flüssigkeit auch durch einen Filter 14, beispielsweise einen Beutelfilter, geleitet werden, um gegebenenfalls verbleibende Reste des beladenen Stabilisierungsmittels zu entfernen. Üblicherweise wird das Verfahren auch bei dem Einsatz des Filters 14 so durchgeführt, dass durch die Zentrifugalseparation mit dem Zentrifugalseparator 5 zumindest 95 %, vorzugsweise 98 % des Stabilisierungsmittels aus der Flüssigkeit abgetrennt wird, wobei sich der Anteil auf das Gewicht des insgesamt enthaltenen Stabilisierungsmittels bezieht.

### Bezugszeichen

- 1: Bierfiltration
- F: Fließrichtung
- 2: Pumpe
- 3: Stabilisierungsmittelzuführung
- 4: Kontakt- und Reaktionsbereich
- 5: Zentrifugalseparator
- 6: erster Ausgang
- 7: Weiterverarbeitung
- 8: zweiter Ausgang
- 9: Regenerationseinrichtung
- 10: Transporteinrichtung
- 11a-d: Sprüh- und/oder Spüleinrichtungen
- 12: Abspüleinrichtung
- 13: Puffertank
- 14: Filter

## Patentansprüche

1. Verfahren zur Stabilisierung von Getränken, insbesondere von Bier, bei dem eine zu stabilisierende Flüssigkeit zugeführt und mit einem Stabilisierungsmittel versetzt wird und wobei Bestandteile der Flüssigkeit von dem Stabilisierungsmittel gebunden und nachfolgend mit dem Stabilisierungsmittel aus der Flüssigkeit entfernt werden,
**dadurch gekennzeichnet, dass** das mit den gebundenen Bestandteilen beladene Stabilisierungsmittel durch Zentrifugalseparation von der Flüssigkeit getrennt wird.

2. Verfahren nach Anspruch 1, **dadurch gekennzeichnet, dass** das durch die Zentrifugalseparation abgetrennte Stabilisierungsmittel regeneriert wird, wobei zumindest ein Teil der gebundenen Bestandteile bei der Regeneration entfernt wird.

3. Verfahren nach Anspruch 2, **dadurch gekennzeichnet, dass** die Regeneration in einem kontinuierlichen, mehrstufigen Regenerationsprozess verfolgt.

4. Verfahren nach Anspruch 2 oder 3, **dadurch gekennzeichnet, dass** die Regeneration des Stabilisierungsmittels durch die Behandlung mit einer Säure und/oder Lauge und/oder Heißwasser erfolgt.

5. Verfahren nach einem der vorhergehenden Ansprüche, **dadurch gekennzeichnet, dass** als Stabilisierungsmittel Polyvinylpolypyrrolidon eingesetzt wird.

6. Verfahren nach einem der vorhergehenden Ansprüche, wobei die zu stabilisierende Flüssigkeit kontinuierlich zugeführt und/oder die stabilisierte Flüssigkeit kontinuierlich abgeführt wird.

7. Verfahren nach einem der vorhergehenden Ansprüche, **dadurch gekennzeichnet, dass** das Stabilisierungsmittel über eine Dosiervorrichtung der zu stabilisierenden Flüssigkeit kontinuierlich zugeführt wird.

8. Verfahren nach einem der vorhergehenden Ansprüche, **dadurch gekennzeichnet, dass** die zu stabilisierende Flüssigkeit aus einem Fitrationsprozess zugeführt wird.

9. Verfahren nach einem der vorhergehenden Ansprüche, **dadurch gekennzeichnet, dass** die stabilisierte Flüssigkeit nach der Zentrifugalseparation durch einen Filter (14) geleitet wird, um gegebenenfalls verbliebene Reste des beladenen Stabilisierungsmittels zu entfernen.

10. Verfahren nach einem der vorhergehenden Ansprüche, **dadurch gekennzeichnet, dass** durch die Zentrifugalseparation zumindest 95%, vorzugsweise zumindest 98% des Stabilisierungsmittels aus der Flüssigkeit abgetrennt wird.

11. Getränkebehandlungsanlage zur Stabilisierung von Getränken mit einer Getränkezuführung, einer Stabilisierungsmittelzuführung (3) für die Zuführung eines Stabilisierungsmittels, einem in einer Fließrichtung (F) an die Getränkezuführung und an die Stabilisierungsmittelzuführung (3) anschließenden Kontakt- und Reaktionsbereich (4) und mit einer entlang der Fließrichtung (F) an den Kontakt- und Reaktionsbereich (4) anschließenden Trenneinrichtung, welche dazu ausgebildet ist, das Stabilisierungsmittel mit daran gebundenen Bestandteilen aus der Flüssigkeit zu entfernen,
**dadurch gekennzeichnet, dass** die Trenneinrichtung zumindest einen Zentrifugalseparator (5) umfasst.

12. Getränkebehandlungsanlage nach Anspruch 11, **dadurch gekennzeichnet, dass** dem Zentrifugalseparator (5) eine Rückführung für das Stabilisierungsmittel nachgelagert ist, wobei die Rückführung eine Regenerationseinrichtung (9) für das Stabilisierungsmittel aufweist.

13. Getränkebehandlungsanlage nach Anspruch 12, **dadurch gekennzeichnet, dass** die Regenerationseinrichtung (9) eine Transporteinrichtung (10) für das Stabilisierungsmittel sowie Sprüh- und/oder Spüleinrichtungen (11a-11d) zur Behandlung des Stabilisierungsmittels aufweist.

14. Getränkebehandlungsanlage nach Anspruch 12 oder 13, **dadurch gekennzeichnet, dass** die Rückführung einen Puffertank (13) für das Stabilisierungsmittel aufweist.
